(19) Europäisches Patentamt
European Patent Office
Office européen des brevets

(11) **EP 4 645 429 A1**

(12) **EUROPEAN PATENT APPLICATION**

(43) Date of publication:
**05.11.2025  Bulletin 2025/45**

(21) Application number: **25169052.5**

(22) Date of filing: **08.04.2025**

(51) International Patent Classification (IPC):
*H01M 4/131* (2010.01)   *H01M 4/136* (2010.01)
*H01M 4/36* (2006.01)   *H01M 4/485* (2010.01)
*H01M 4/505* (2010.01)   *H01M 4/525* (2010.01)
*H01M 4/58* (2010.01)

(52) Cooperative Patent Classification (CPC):
H01M 4/131; H01M 4/136; H01M 4/364;
H01M 4/366; H01M 4/485; H01M 4/505;
H01M 4/525; H01M 4/5825; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  **29.04.2024  KR 20240057048**

(71) Applicant: **SAMSUNG SDI CO., LTD.**
**Yongin-si, Gyeonggi-do 17084 (KR)**

(72) Inventors:
• **KIM, Young-Ki**
**17084 Yongin-si (KR)**

• CHOI, Aram
**17084 Yongin-si (KR)**
• KIM, Sangmi
**17084 Yongin-si (KR)**
• DOO, Sungwook
**17084 Yongin-si (KR)**
• KANG, Gwiwoon
**17084 Yongin-si (KR)**
• LEE, Soonrewl
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57)    A positive electrode for a rechargeable lithium battery, including a current collector, a first positive electrode active material layer on the current collector, and a second positive electrode active material layer on the first positive electrode active material layer. The first positive electrode active material layer includes a first particle having an olivine structure, and a second particle having a layered structure, and the second positive electrode active material layer includes a third particle having an olivine structure. The first particle is a single particle, the third particle is in the form of a secondary particle in which a plurality of third primary particles are aggregated, and the second particle has a greater average particle diameter than each of the first particle and the third particle. Also disclosed is a rechargeable lithium battery including the same.

FIG. 7

## Description

## BACKGROUND

### 1. Field

The present invention relates to a positive electrode active material for a rechargeable lithium battery, a positive electrode including the same, and a rechargeable lithium battery including the same. More particularly, the present invention relates to a positive electrode active material including an olivine-based lithium compound, a positive electrode active material including a layered lithium compound, a positive electrode including the same, and a rechargeable lithium battery including the same.

### 2. Description of the Related Art

Lately, the rapid spread of battery-powered electronics, such as mobile phones, laptop computers, and electric vehicles, has driven a sharp rise in demand for rechargeable batteries provided with high energy density and high capacity. Accordingly, extensive research efforts are directed towards improving the performance of rechargeable lithium batteries.
Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

## SUMMARY

The present invention provides a positive electrode active material that is economical and has high energy density, high average voltage, and excellent lifetime.
The present invention also provides a positive electrode that is economical and has high energy density, high average voltage, and excellent lifetime.
According to a first aspect of the present invention there is provided a positive electrode for a rechargeable lithium battery, including a current collector, a first positive electrode active material layer on the current collector, and a second positive electrode active material layer on the first positive electrode active material layer.
The first positive electrode active material layer includes a first particle represented by Formula 1 below and having an olivine structure, and a second particle represented by Formula 2 below and having a layered structure, and the second positive electrode active material layer may include a third particle represented by Formula 3 below and having an olivine structure.
The first particle is in the form of a single particle, the third particle is in the form of a secondary particle in which a plurality of third primary particles are aggregated, and the second particle has a greater average particle diameter than each of the first particle and the third particle.

$$\text{Formula 1} \qquad \text{Li}_{a1}\text{Mn}_{z1}\text{Fe}_{x1}\text{B1}_{y1}\text{PO}_{4-c1}$$

In Formula 1 above, B1 is at least one element selected from the group consisting of Al, Ti, V, and Mg, and $0.8 \leq a1 \leq 1.2$, $0.4 \leq z1 \leq 0.8$, $0.2 \leq x1 \leq 0.6$, $0 \leq y1 \leq 0.05$ (e.g., $0.001 \leq y1 \leq 0.05$), $0 \leq c1 \leq 0.05$, and $x1 + y1 + z1 = 1$ is satisfied.

$$\text{Formula 2} \qquad \text{Li}_{a2}\text{Ni}_{x2}\text{Co}_{y2}\text{Mn}_{z2}\text{B2}_{b2}\text{O}_{2-c2}$$

In Formula 2 above, B2 is at least one element selected from the group consisting of Al, Ti, Mg, Zr, Mo, and Nb, and $0.8 \leq a2 \leq 1.2$, $0.5 \leq x2 \leq 0.8$, $0.0 \leq y2 \leq 0.10$, $0.1 \leq z2 \leq 0.35$, $0 \leq b2 \leq 0.1$ (e.g., $0.01 \leq b2 \leq 0.1$), $0 \leq c2 \leq 0.05$, and $x2 + y2 + z2 + b2 = 1$ is satisfied.

$$\text{Formula 3} \qquad \text{Li}_{a3}\text{Mn}_{z3}\text{Fe}_{x3}\text{B3}_{y3}\text{PO}_{4-c3}$$

In Formula 3 above, B3 is at least one element selected from the group consisting of Al, Ti, V, and Mg, and $0.8 \leq a3 \leq 1.2$, $0.4 \leq z3 \leq 0.8$, $0 \leq x3 \leq 0.6$, $0 \leq y3 \leq 0.05$ (e.g., $0.001 \leq y3 \leq 0.05$), $0 \leq c3 \leq 0.05$, and $x3 + y3 + z3 = 1$ is satisfied.
At least some of the above and other features of the invention are set out in the claims.

## BRIEF DESCRIPTION OF THE DRAWINGS

The accompanying drawings are included to provide a further understanding of the subject matter of the present disclosure, and are incorporated in and constitute a part of this specification. The drawings illustrate embodiments of the present disclosure and, together with the description, serve to explain principles of embodiments of the present disclosure. In the drawings:

FIG. 1 is a simplified conceptual view showing a rechargeable lithium battery according to embodiments of the present disclosure;

FIGS. 2-5 are schematic views showing a rechargeable lithium battery according to an embodiment, and FIG. 2 shows a cylindrical battery, FIG. 3 shows a prismatic battery, and FIGS. 4-5 show pouch-type batteries;

FIG. 6 is a cross-sectional view showing a positive electrode for a rechargeable lithium battery according to embodiments of the present disclosure;

FIG. 7 is an enlarged view showing a first positive electrode active material layer of a rechargeable lithium battery according to embodiments of the present disclosure;

FIG. 8 is an enlarged view showing a second positive electrode active material layer of a rechargeable lithium battery according to embodiments of the present disclosure;

FIG. 9 is a pair of scanning electron microscope (SEM) images showing a first particle according to an embodiment of the present disclosure;

FIG. 10 is a pair of SEM images showing a second particle according to an embodiment of the present disclosure; and

FIG. 11 is a pair of SEM images showing a third particle according to an embodiment of the present disclosure.

## DETAILED DESCRIPTION

Hereinafter, embodiments of the present disclosure will be described clearly and in more detail to such an extent that those skilled in the art easily implement the present disclosure. In order to sufficiently understand the configuration and effects of the subject matter of the present disclosure, example embodiments of the present disclosure will be described with reference to the accompanying drawings. It should be noted, however, that the subject matter of the present disclosure is not limited to the following embodiments, and may be implemented in various suitable forms and variously modified. The embodiments herein are provided so that this disclosure will be thorough and complete and will fully convey the scope of the present disclosure to those having ordinary skill in the art.

Herein, it will be understood that if a component is referred to as being on another component, the component may be directly on another component, or an intervening third component may be present. In embodiments, in the drawings, thicknesses of components may be exaggerated to effectively describe the technical contents of the present disclosure. Like reference numerals refer to like elements throughout.

Unless otherwise specified herein, the expression of a singular form may include the expression of a plural form. In embodiments, unless otherwise specified, the phrase "A or B" may indicate "A but not B", "B but not A", or "A and B". The terms "comprises," "includes," "including," and/or "comprising" used herein do not exclude the presence or addition of one or more other components.

As used herein, the term "combination thereof" may refer to a mixture, a stack, a composite, a copolymer, an alloy, a blend, and/or a reaction product.

Unless otherwise defined herein, a particle diameter may be an average particle diameter. In embodiments, a particle diameter is defined as an average particle diameter ($D_{50}$) indicating the diameter of particles having a cumulative volume of 50 volume% in the particle size distribution. The average particle diameter ($D_{50}$) may be measured by any suitable method generally used in the art, for example, by a particle size analyzer, a transmission electron micrograph, and/or a scanning electron micrograph. In embodiments, an average particle diameter ($D_{50}$) value may be obtained by measuring a subject using a dynamic light-scattering-based measuring device, performing data analysis, counting the number of particles for each particle size range, and then calculating the value therefrom. In embodiments, the average particle diameter ($D_{50}$) may be measured using a laser diffraction method. In the measuring using the laser diffraction method, for example, target particles are distributed in a distribution solvent, introduced into a commercially available laser diffraction particle diameter measuring device (e.g., MT 3000 available from Microtrac, Ltd.), irradiated with ultrasonic waves of about 28 kHz at a power of 60 W, and then an average particle diameter ($D_{50}$) based on 50% of the particle diameter distribution in the measuring device may be calculated.

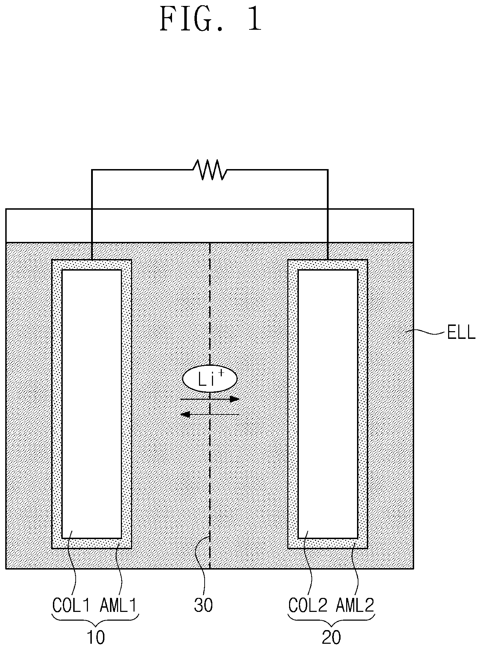

FIG. 1 is a simplified conceptual view showing a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

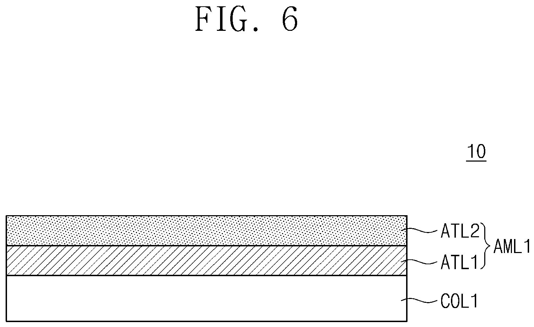

The positive electrode 10 for a rechargeable lithium battery includes a current collector COL1 and a positive electrode active material layer AML1 on the current collector. The positive electrode active material layer AML1 includes a positive electrode active material and may further include a binder and/or a conductive material (e.g., an electrically conductive material). A detailed description of the positive electrode active material layer AML1 according to embodiments of the present disclosure will be further described with reference to FIG. 6. Al may be used as the current collector COL1, but embodiments of the present disclosure are not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The current collector COL2 may include a copper foil, a nickel foil, a stainless steel foil, a titanium foil, a nickel foam, a copper foam, a polymer substrate coated with a conductive metal, or a combination thereof

## Negative Electrode Active Material

The negative electrode active material in the negative electrode active material layer AML2 may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. Examples of the crystalline carbon may be graphite such as irregular, planar, flaky, spherical, or fibrous natural graphite or artificial graphite, and examples of the amorphous carbon may be soft carbon (low-temperature fired carbon), hard carbon, mesophase pitch carbide, fired cokes, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiOx$ ($0 < x < 2$), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

## Rechargeable Lithium Battery

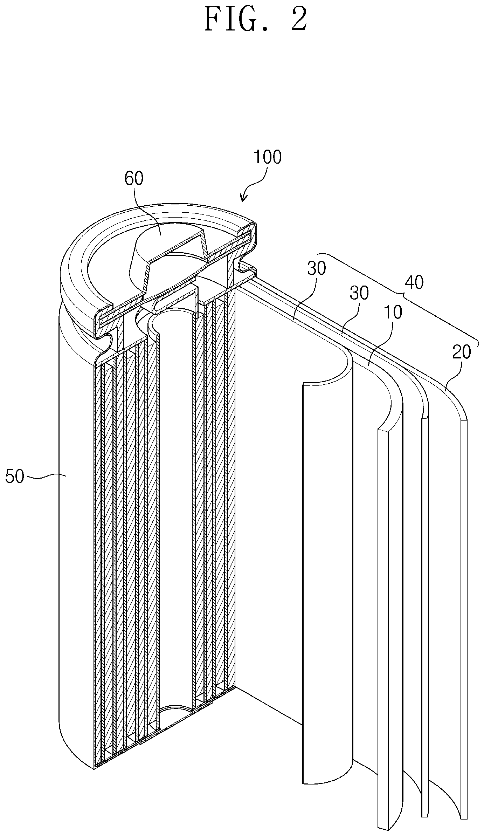

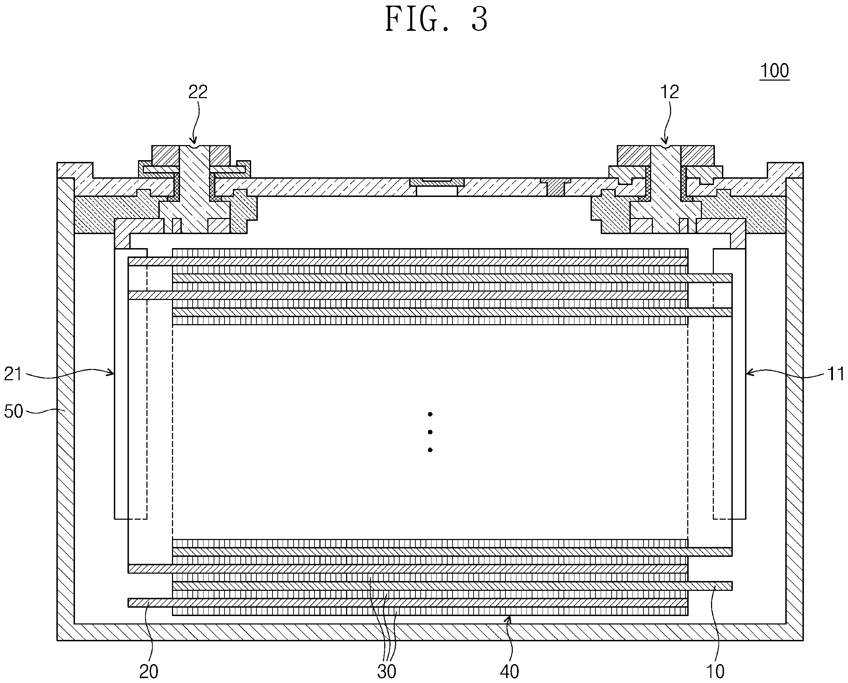

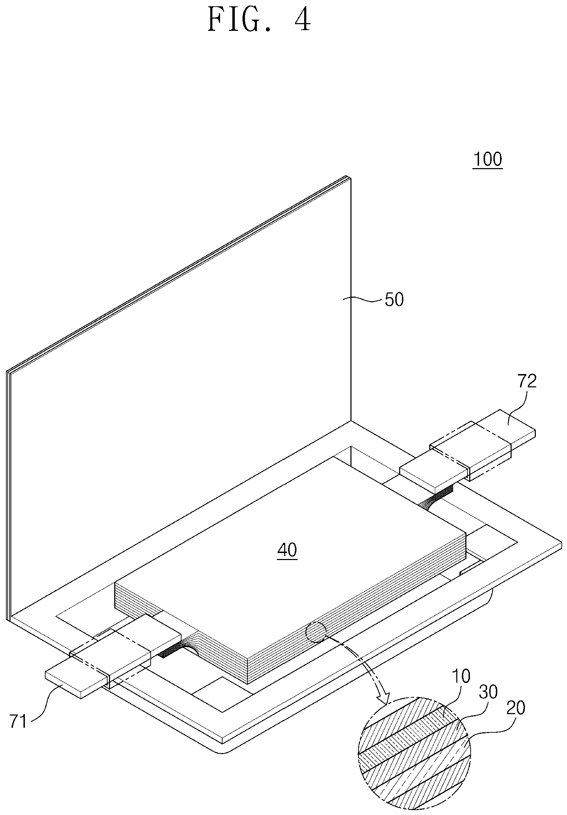

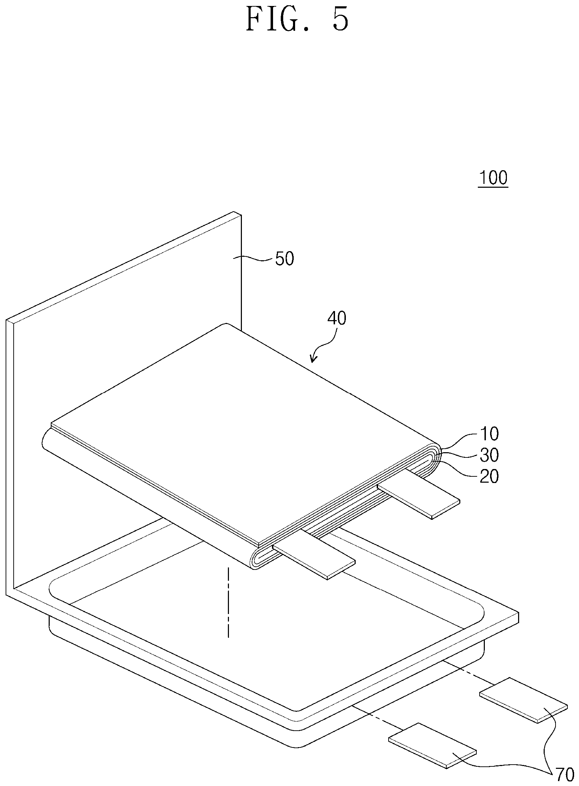

The rechargeable lithium battery may be classified into cylindrical, prismatic, pouch, or coin-type batteries, and the like depending on their shape. FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

FIG. 6 is a cross-sectional view showing a positive electrode for a rechargeable lithium battery according to embodiments of the present disclosure. Referring to FIG. 6, the positive electrode 10 for a rechargeable lithium battery may include the current collector COL1 (see FIG. 1) and the positive electrode active material layer AML1 (see FIG. 1) as described above. The positive electrode active material layer AML1 may include a first positive electrode active material layer ATL1, and a second positive electrode active material layer ATL2 stacked on the first positive electrode active material layer ATL1.

Hereinafter, each of the first positive electrode active material layer ATL1 and the second positive electrode active material layer ATL2 will be described in more detail.

## First Positive Electrode Active Material Layer ATL1

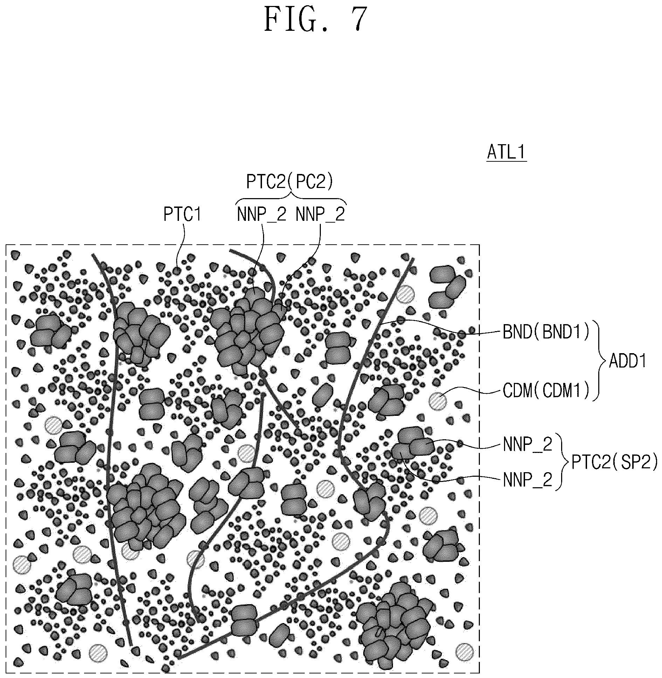

FIG. 7 is an enlarged view showing a first positive electrode active material layer ATL1 of a positive electrode for a rechargeable lithium battery according to embodiments of the present disclosure.

The first positive electrode active material layer ATL1 includes a first particle PTC1 and a second particle PTC2, and may also include or includes a first functional additive ADD1. The first functional additive ADD1 may include a first binder BND1 and a first conductive material CDM1 (e.g., a first electrically conductive material CDM1).

The first binder BND1 may combine (e.g., adhere together) the first particle PTC1 and the first conductive material CDM1. In embodiments, the first binder BND1 may stably fix the first positive electrode active material layer ATL1 to the current collector COL1. For example, the first binder BND1 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The first conductive material CDM1 may be used to improve conductivity (e.g., electrical conductivity) of the first positive electrode active material layer ATL1. Any suitable conductive material that does not cause chemical changes (e.g., does not cause undesirable chemical changes) in the first positive electrode active material layer ATL1 may be used as the first conductive material CDM1 without limitation. For example, the first conductive material CDM1 may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

Hereinafter, each of the first particle PTC1 and the second particle PTC2 in the first positive electrode active material layer ATL1 will be described in more detail.

**First Particle PTC1**

The first particle PTC1 includes an olivine-based lithium compound represented by Formula 1 below.

$$\text{Formula 1} \qquad Li_{a1}Mn_{z1}Fe_{x1}B1_{y1}PO_{4-c1}$$

In Formula 1 above, $0.8 \leq a1 \leq 1.2$, $0.4 \leq z1 \leq 0.8$, $0.2 \leq x1 \leq 0.6$, $0 \leq y1 \leq 0.05$ (e.g., $0.001 \leq y1 \leq 0.05$), and $0 \leq c1 \leq 0.05$ are satisfied. B1 is at least one element selected from the group consisting of Al, Ti, V, and Mg. B1 is a dopant with which the first particle PTC1 is doped. For example, B1 may include Ti.

The first particle PTC1 may further include carbon derived from the positive electrode active material layer AML1 described above. The first particle PTC1 may have a carbon element content of about 0.5 wt% to about 5 wt%, about 0.5 wt% to about 3 wt%, or about 0.5 wt% to about 2 wt%. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The first particle PTC1 is or may be in the form of a single particle. Herein, the term single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 first primary particles NNP_1 are attached to one another.

The first particle PTC1 may be a nanomorphous positive electrode active material. The first particle PTC1 may include at least one first primary particle NNP_1. In an embodiment, the first particle PTC1 may be in the shape of sphere or oval (e.g., may be generally spherical or generally ovoid) in which first primary particles are aggregated. For another example, the first particle PTC1 may not have a spherical shape but have an irregular shape even if the first primary particles NNP_1 agglomerate.

In an embodiment, the average particle diameter may indicate a particle diameter ($D_{50}$) if a cumulative volume is about 50 volume% in a particle size distribution. In an embodiment, the average particle diameter ($D_{50}$) of the first particle PTC1 may be a value measured using a particle size analyzer.

In an embodiment, the first particle PTC1 may have an average particle diameter of about 500 nm to about 5 $\mu$m, about 100 nm to about 3 $\mu$m, about 500 nm to about 2.5 $\mu$m, or about 1 $\mu$m. The average particle diameter ($D_{50}$) of the first particle PTC1 may be smaller than an average particle diameter ($D_{50}$) of the second particle PTC2, which will be further described below.

The size of at least one first primary particle NNP_1 constituting the first particle PTC1 may be measured using a scanning electron microscope (SEM). In an embodiment, the size of the first primary particle NNP_1 may indicate a diameter measured by randomly selecting about 30 first primary particles NNP_1 from an electron micrograph of a positive electrode active material. The first primary particle NNP_1 may be uniform (e.g., substantially uniform) in size. At least one first primary particle NNP_1 constituting the first particle PTC1 may have a size of about 100 nm to about 200 nm, about 50 nm to about 150 nm, about 50 nm to about 100 nm, about 100 nm to about 150 nm, or about 200 nm to about 300 nm. The first primary particles NNP_1 may have a smaller average size than the second primary particles NNP_2, which will be further described below.

The first particle PTC1 may include at least one primary particle (or single particle). The size of at least one first primary particle NNP_1 constituting the first particle PTC1 may be measured using a scanning electron microscope (SEM). In an embodiment, the size of the first primary particle NNP_1 may indicate a diameter measured by randomly selecting about 30 first primary particles NNP_1 from an electron micrograph of a positive electrode active material. The first primary particle NNP_1 may be uniform (e.g., substantially uniform) in size.

In an embodiment, the first particle PTC1 may include a coating layer on a surface thereof. The coating layer may entirely cover the surface of the first particle PTC1, or may partially cover the surface of the first particle PTC1. For example, the coating layer may include carbon and/or a carbon-containing compound. The coating layer may further include at least one selected from the group consisting of an aluminium-containing compound, a titanium-containing compound, a magnesium-containing compound, and a vanadium-containing compound. Metal-containing compounds, such as aluminium-containing compounds, titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals and/or non-metallic elements. For example, the metal-containing compounds may further include lithium. The first particle PTC1 may have improved structural stability and electrical conductivity due to the coating layer.

In an embodiment, the first particle PTC1 may further include a grain boundary coating layer on a surface of each of the first primary particles NNP_1. The grain boundary coating layer may be present inside the first particle PTC1. The grain boundary coating layer may be present along an interface between the first primary particles NNP_1 inside the first particle PTC1. For example, the grain boundary coating layer may indicate a material applied onto a grain boundary inside the first particle PTC1.

The grain boundary coating layer may include carbon and/or a carbon-containing compound. The grain boundary coating layer may further include at least one selected from the group consisting of an aluminium-containing compound, a titanium-containing compound, a magnesium-containing compound, and a vanadium-containing compound.

The inside of the first particle PTC1 described above may indicate the entire inside portion of the first particle PTC1 excluding the surface of the first particle PTC1. For example, the inside of the first particle PTC1 may indicate a region of the entire inside from about 10 nm in depth, or from about 10 nm to about 2 $\mu$m in depth, with respect to the surface of the first particle PTC1.

The first particle PTC1 may further include a grain boundary coating portion, and may thus have greater structural stability and have a uniform (e.g., substantially uniform) coating layer formed on the surface thereof. In embodiments, the first particle PTC1 may further include a grain boundary coating portion, and may thus have further improved electrical conductivity.

The first particle PTC1 may further include carbon derived from the coating layer and/or the grain boundary coating layer described above. The first particle PTC1 may have a carbon element content of about 0.5 wt% to about 10 wt%, about 1 wt% to about 3 wt%, or about 1.5 wt% to about 2.5 wt%. For example, the first particle PTC1 may have a greater content of carbon if in the form of a secondary particle than in the form of a single particle. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The first particle PTC1 may be in the shape of sphere (e.g., may be generally spherical) in which a plurality of first primary particles NNP_1 are aggregated. The first particle PTC1 may have the first primary particles NNP_1 closely aggregated, may thus exhibit the following characteristics. The first particle may keep the coating layer and/or the grain boundary coating layer described above well, and may thus have greater electrical conductivity and improved low-temperature characteristics. Due to the increased bindability of an electrode plate, binder capacity may be reduced (e.g., an amount of binder utilized may be reduced). The first particle PTC1 may be in the shape of sphere or oval (e.g., may be generally spherical or generally ovoid).

**Second Particle PTC2**

The second particle PTC2 includes a lithium compound having a layered structure represented by Formula 2 below.

$$\text{Formula 2} \qquad Li_{a2}Ni_{x2}Co_{y2}Mn_{z2}B2_{b2}O_{2-c2}$$

In Formula 2 above, $0.8 \leq a2 \leq 1.2$, $0.5 \leq x2 \leq 0.8$, $0.0 \leq y2 \leq 0.10$, $0.1 \leq z2 \leq 0.35$, $0 \leq b2 \leq 0.1$ (e.g., $0.01 \leq b2 \leq 0.1$), $0 \leq c2 \leq 0.05$, and $x2 + y2 + z2 + b2 = 1$ are satisfied. B2 is at least one element selected from the group consisting of Al, Ti, Mg, Zr, Mo, and Nb. B2 is a dopant with which the second particle PTC2 is doped. The dopant may allow the second particle PTC2 to have increased surface stability and structural stability.

The second particle PTC2 is one having a combination of high capacity of nickel (e.g., high concentration of nickel), thermal stability and low price of manganese, and stable electrochemical properties of cobalt, and may include a layered compound having excellent electrochemical properties.

The second particle PTC2 is a nickel-based active material and includes lithium nickel-based composite oxide. The second particle PTC2 may include a high nickel-based positive electrode active material including a high content of nickel. The high nickel-based positive electrode active material may achieve high capacity and high performance. In another embodiment, the second particle PTC2 may include a 'mid' nickel-based positive electrode active material including an intermediate content of nickel. The mid nickel-based positive electrode active material may achieve high capacity and high performance. Inclusion of the second particle PTC2 according to the present invention allows rechargeable batteries to obtain high capacity and high energy density.

Referring to FIG. 7, the second particle PTC2 may be in the form of a single particle. Herein, the single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 second primary particles NNP_2 are attached to one another. Herein, the second particle PTC2 in the form of a single particle may be defined as a small particle SP2 and/or a fine particle SP2.

If the second particle PTC2 is a single particle, the second particle PTC2 may include at least one second primary particle. In an embodiment, the second particle PTC2 may be in the shape of sphere or oval (e.g., may be generally spherical or generally ovoid) in which second primary particles NNP_2 are aggregated or agglomerated. In another embodiment, the second particle PTC2 may not have a spherical shape but have an irregular shape even if the second primary particles NNP_2 attach to one another. If the second particle PTC2 is in the form in which second primary particles NNP_2 attach together, the second particle PTC2 may be less structured than a second particle PTC2 in the form of polycrystal, which will be further described below. This means the second particle PTC2 may be in a more irregular form.

In an embodiment, the average particle diameter may indicate a particle diameter ($D_{50}$) if a cumulative volume is about 50 volume% in a particle size distribution. In an embodiment, the average particle diameter ($D_{50}$) of the second particle PTC2 may be a value measured using a particle size analyzer. The small particle SP2 may have an average particle diameter ($D_{50}$) of about 2 $\mu$m to about 5 $\mu$m, about 1 $\mu$m to about 4 $\mu$m, about 2 $\mu$m to about 3 $\mu$m, about 3 $\mu$m to about 7 $\mu$m, about 4 $\mu$m to about 6 $\mu$m, or about 5 $\mu$m.

Referring to FIG. 7, the second particle PTC2 is in the form of a polycrystal and may include a secondary particle in which at least two second primary particles NNP_2 are aggregated or agglomerated. For example, one second particle PTC2 may include a plurality of second primary particles NNP_2 aggregated or agglomerated together. The second particle PTC2 including the plurality of second primary particles NNP_2 may be in the shape of an agglomerate sphere (e.g., may be generally spherical), or may have an irregular shape even if the second primary particles NNP_2 agglomerate. Herein, the second particle PTC2, which is a single particle, may be defined as a large particle PC2.

In an embodiment, the average particle diameter may indicate a particle diameter ($D_{50}$) if a cumulative volume is about 50 volume% in a particle size distribution. In an embodiment, the large particle PC2 may have an average particle diameter ($D_{50}$) of about 10 $\mu$m to about 20 $\mu$m, about 12 $\mu$m to about 15 $\mu$m, about 12 $\mu$m to about 18 $\mu$m, about 14 $\mu$m to about 18 $\mu$m, about 15 $\mu$m to about 20 $\mu$m, or about 16 $\mu$m. The large particle PC2 may have a greater average particle diameter ($D_{50}$) than the small particle SP2. The number of second primary particles NNP_2 constituting the large particle PC2 may be greater than the number of second primary particles NNP_2 constituting the small particle SP2. For example, the large particle PC2 may be more dense and structured than the small particle SP2.

The second particle PTC2 may include both the large particle PC2 and the small particle SP2. The second particle PTC2 may have an average particle diameter ($D_{50}$) of about 3 $\mu$m to about 20 $\mu$m, about 4 $\mu$m to about 15 $\mu$m, about 4 $\mu$m to about 10 $\mu$m, about 10 $\mu$m to about 20 $\mu$m, about 12 $\mu$m to about 15 $\mu$m, or about 5 $\mu$m to about 12 $\mu$m. For example, the second particle PTC2 may have an average particle diameter ($D_{50}$) of about 11 $\mu$m. The second particle PTC2 has or may have a greater average particle diameter ($D_{50}$) than the first particle PTC1 and the third particle PTC3.

The second primary particles NNP_2 constituting the second particle PTC2 may have an average size of about 0.5 $\mu$m to about 5 $\mu$m, about 1 $\mu$m to about 3 $\mu$m, about 2 $\mu$m to about 3 $\mu$m, or about 2 $\mu$m. In an embodiment, the size of the second primary particles NNP_2 may indicate a diameter measured by randomly selecting about 30 primary particles from an electron micrograph of a positive electrode active material. The second primary particles NNP_2 may be uniform (e.g., substantially uniform) in size. The second primary particles NNP_2 may have a greater average size than the first primary particles NNP_1.

In an embodiment, the second particle PTC2 may include a coating layer on a surface thereof. The second particle may include the second coating layer, and may thus effectively prevent structural collapse (or reduce a likelihood or degree of structural collapse) caused by repeated charging/discharging. Accordingly, rechargeable batteries may have improved lifetime characteristics.

The coating layer may include an aluminium-containing compound, a titanium-containing compound, a magnesium-containing compound, a zirconium-containing compound, a molybdenum-containing compound, a niobium-containing compound, or a combination thereof. Metal-containing compounds in the coating layer may be, for example, metal oxides, metal hydroxides, metal carbonates, composites thereof, or mixtures thereof. The metal-containing compounds may further include other metals and/or non-metallic elements. For example, the coating layer may further include lithium, manganese, and/or nickel.

A method of measuring the metal content in the coating layer of the second particle PTC2 may include performing scanning electron microscopy and energy dispersive X-ray spectroscopy (SEM-EDS) on the second particle PTC2. Through the analysis described above, the content of aluminium, titanium, magnesium, zirconium, molybdenum and/or niobium in the coating layer may be determined. In addition to, or alternatively to, SEM-EDS, methods of measuring the metal content in the coating layer may include inductively coupled plasma-mass spectrometry (ICP-MS), inductively coupled plasma optical emission spectroscopy (ICP-OES), and/or the like.

In an embodiment, the second particle PTC2 may be in a form of a mixture of the large particle PC2 and the small particle SP2. In embodiments, in which the second particle PTC2 is in the form of a mixture of the large particle PC2 and the small particle SP2 in the positive electrode active material, the second particle PTC2 may be referred to as bimodal, of bimodal type or as having a bimodal particle size distribution.

In an embodiment, with respect to a total content of the bimodal second particle PTC2, the large particle PC2 may be present in a higher content than the small particle SP2. In an embodiment, the content of the small particle SP2 may be about 20 wt% to about 40 wt% with respect to the total content of the second particle PTC2.

The second particle PTC2 may have a smaller Brunauer-Emmett-Teller (BET) specific surface area than the first particle PTC1. For example, the second particle may have a BET specific surface area of about 0.3 $m^2/g$ to about 1.2 $m^2/g$. The BET specific surface area of positive electrode active materials may be measured using gas adsorption analysis, which is a widely used method for evaluating surface area and pore structure. BET analysis is conducted by measuring the amount of nitrogen ($N_2$) or argon (Ar) gas adsorbed at low temperatures under various pressures ($P/P_0$). The specific surface area ($m^2/g$) is then calculated using the BET equation. For example, the BET specific surface area measurement follows these steps: (1) Sample Preparation: the cathode active material is dried and pre-treated at 300-400°C to remove moisture and organic contaminants; (2) Gas Adsorption Experiment: the sample is placed in a BET analyzer, and nitrogen or argon gas is adsorbed at specific relative pressures to measure the amount of gas adsorbed; (3) Surface Area Calculation: the BET equation is applied to the adsorption data to determine the specific surface area (SSA, $m^2/g$).

Hereinafter, the first positive electrode active material layer ATL1 will be described in more detail. The first positive electrode active material layer ATL1 includes a first particle PTC1 and a second particle PTC2. In the first positive electrode active material layer ATL1, the second particle PTC2 may be less than the first particle PTC1 in weight (or mass).

Both the first particle PTC1 and the second particle PTC2 include manganese (Mn), and thus rechargeable batteries may have improved operating voltage. The second particle PTC2 includes nickel, and thus rechargeable batteries may have improved energy density and high capacity compared to rechargeable lithium batteries including the first particle PTC1 but not the second particle PTC2.

The first particle PTC1 provides benefits such as high stability and long life. Using the structurally stable first particle PTC1 as a material of the positive electrode active material may make up for relatively low stability and short lifetime of the second particle PTC2.

The positive electrode active material layer according to embodiments of the present disclosure has the first particle PTC1 and the second particle PTC2 mixed together in a suitable or appropriate ratio, and may thus have improved energy density, capacity, and operation voltage compared to batteries including general lithium iron phosphate-based compounds or lithium manganese iron phosphate-based compounds.

Because the size of the first particle PTC1 is very small, the binder BND may be utilized or required in large quantities to attach the first particle PTC1 to the current collector COL1 (see FIG. 1).

The average particle diameter ($D_{50}$) of the second particle PTC2 may be several micrometers. In embodiments of the present disclosure, a first positive electrode active material layer ATL1 further including a second particle PTC2 having a large average particle diameter ($D_{50}$) is provided, and accordingly, the first positive electrode active material layer ATL1 may have improved bindability with respect to the current collector COL1 while including a nano-sized olivine-based compound in large quantities. For example, an electrode plate may be more readily prepared through the first positive electrode active material layer ATL1 in which the first particle PTC1 and the second particle PTC2 are mixed together.

In embodiments, an electrode plate may be more readily prepared by first attaching the first positive electrode active material layer ATL1 on a current collector. An electrode plate may have improved resistance (e.g., electrical resistance) by first forming the first positive electrode active material layer ATL1 having strong bindability with respect to a current collector. In embodiments, a rechargeable lithium battery having excellent performance may be provided.

**Second positive electrode active material layer ATL2**

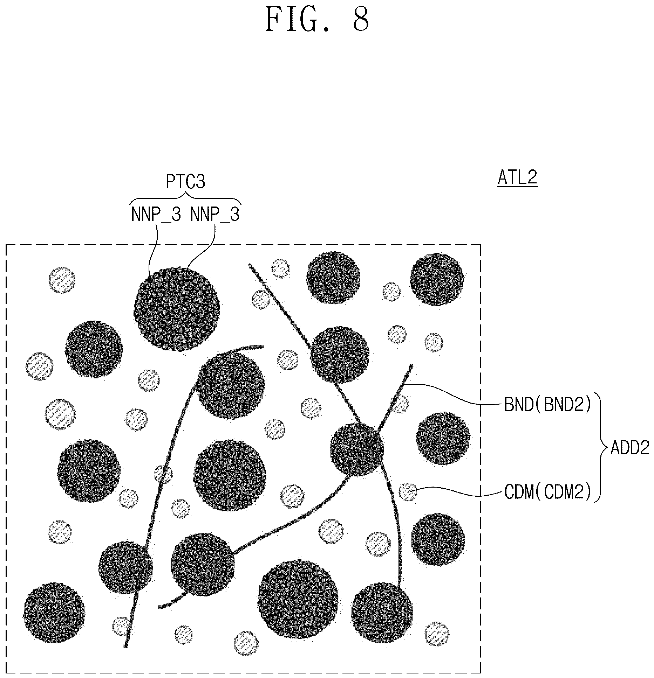

FIG. 8 is an enlarged view showing a second positive electrode active material layer of a positive electrode for a rechargeable lithium battery according to embodiments of the present disclosure.

Referring to FIG. 8, the second positive electrode active material layer ATL2 includes a third particle PTC3 and may include or includes a second functional additive ADD2. The second functional additive ADD2 includes a second binder BND2 and a second conductive material CDM2 (e.g., a second electrically conductive material CDM2).

The second binder BND2 may combine (e.g., adhere together) the third particle PTC3 and the second conductive material CDM2. In embodiments, the second binder BND2 may stably fix the second positive electrode active material layer ATL2 onto the first positive electrode active material layer ATL1. In an embodiment, the second binder BND2 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The second conductive material CDM2 may be used to improve conductivity (e.g., electrical conductivity) of the second positive electrode active material layer ATL2. Any suitable electrically conductive material that does not cause chemical changes (e.g., that does not cause undesirable chemical changes) in the second positive electrode active material layer ATL2 may be used as the second conductive material CDM2 without limitation. In an embodiment, the second conductive material CDM2 may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

**Third Particle PTC3**

The third particle PTC3 includes an olivine-based lithium compound represented by Formula 3 below.

$$\text{Formula 3} \qquad Li_{a3}Mn_{z3}Fe_{x3}B3_{y3}PO_{4-c3}$$

In Formula 3 above, $0.8 < a3 \leq 1.2$, $0.4 \leq z3 \leq 0.8$, $0 \leq x3 \leq 0.6$, $0 \leq y3 \leq 0.05$ (e.g., $0.001 \leq y3 \leq 0.05$), and $0 \leq c3 \leq 0.05$ are satisfied. B3 is at least one element selected from the group consisting of Al, Ti, V, and Mg. B3 is a dopant with which the third particle PTC3 is doped. For example, B3 may include Ti.

The third particle PTC3 may further include carbon derived from the positive electrode active material layer AML1 described above. The third particle PTC3 may have a carbon element content of about 0.5 wt% to about 5 wt%, about 0.5 wt% to about 3 wt%, or about 0.5 wt% to about 2 wt%. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The third particle PTC3 is in the form of a polycrystal and includes or may include secondary particles in which at least two third primary particles NNP_3 are aggregated. For example, one third particle PTC3 may include a plurality of third primary particles NNP_3 aggregated together. The third particle PTC3 including the plurality of third primary particles NNP_3 may be in the shape of sphere or oval (e.g., may be generally spherically or generally ovoid).

In an embodiment, the average particle diameter may indicate a particle diameter ($D_{50}$) if a cumulative volume is about 50 volume% in a particle size distribution. In an embodiment, the average particle diameter ($D_{50}$) of the third particle PTC3 may be a value measured using a particle size analyzer.

The third particle PTC3 including at least one third primary particle NNP_3 may have an average particle diameter of about 50 nm to about 5 $\mu$m, about 100 nm to about 3 $\mu$m, about 500 nm to about 2.5 $\mu$m, about 3 $\mu$m to about 7 $\mu$m, about 4 $\mu$m to about 6 $\mu$m, or about 5 $\mu$m. The average particle diameter ($D_{50}$) of the third particle PTC3 is or may be smaller than the average particle diameter ($D_{50}$) of the second particle PTC2 described above.

The third particle PTC3 includes or may include at least one primary particle (or single particle). The size of at least one third primary particle NNP_3 constituting the third particle PTC3 may be measured using a scanning electron microscope (SEM). In an embodiment, the size of the third primary particle NNP_3 may indicate a diameter measured by randomly selecting about 30 third primary particles NNP_3 from an electron micrograph of a positive electrode active material. The third primary particles NNP_3 may be uniform (e.g., substantially uniform) in size.

At least one third primary particle NNP_3 constituting or that may constitute the third particle PTC3 may have a size of about 100 nm to about 200 nm, about 50 nm to about 150 nm, about 50 nm to about 100 nm, about 100 nm to about 150 nm, or about 200 nm to about 300 nm.

In an embodiment, the third particle PTC3 may include a coating layer on a surface thereof. The coating layer may entirely cover the surface of the third particle PTC3, or may partially cover the surface of the third particle PTC3. For example, the coating layer may include carbon and/or a carbon-containing compound. The coating layer may further include at least one selected from the group consisting of an aluminium-containing compound, a titanium-containing compound, a magnesium-containing compound, and a vanadium-containing compound. Metal-containing compounds, such as aluminium-containing compounds, titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals and/or non-metallic elements. For example, the metal-containing compounds may further include lithium. The third particle PTC3 may have improved structural stability and electrical conductivity due to the coating layer.

In an embodiment, the third particle PTC3 may further include a grain boundary coating layer on a surface of each of the third primary particles NNP_3. The grain boundary coating layer may be present inside the third particle PTC3. The grain boundary coating layer may be present along an interface between the third primary particles NNP_3 inside the third particle PTC3. For example, the grain boundary coating layer may indicate a material applied onto a grain boundary inside the third particle PTC3.

The grain boundary coating layer may include carbon and/or a carbon-containing compound. The grain boundary coating layer may further include at least one selected from the group consisting of an aluminium-containing compound, a titanium-containing compound, a magnesium-containing compound, and a vanadium-containing compound.

The inside of the third particle PTC3 described above may indicate the entire inside portion of the third particle PTC3 excluding the surface of the third particle PTC3. For example, the inside of the third particle PTC3 may indicate a region of the entire inside from about 10 nm in depth, or from about 10 nm to about 2 $\mu$m in depth, with respect to the surface of the third particle PTC3.

The third particle PTC3 further includes a grain boundary coating portion, and may thus have greater structural stability and have a uniform (e.g., a substantially uniform) coating layer on the surface thereof. In embodiments, the third particle PTC3 may further include a grain boundary coating portion, and may thus have further improved electrical conductivity.

The third particle PTC3 may further include carbon derived from the coating layer and/or the grain boundary coating layer described above. The third particle PTC3 may have a carbon element content of about 0.5 wt% to about 10 wt%, about 1 wt% to about 3 wt%, or about 1.5 wt% to about 2.5 wt%. For example, the third particle PTC3 have a greater content of carbon if in the form of a secondary particle than in the form of a single particle. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The third particle PTC3 may be in the shape of sphere (e.g., may be generally spherical) in which a plurality of third primary particles NNP_3 are aggregated. The third particle PTC3 may have the third primary particles NNP_3 closely aggregated, and may thus exhibit the following characteristics. The third particle may keep the coating layer and/or the grain boundary coating layer described above well, and may thus have greater electrical conductivity and improved low-temperature characteristics. Due to the increased bindability of an electrode plate, binder capacity (e.g., a usage amount of the binder) may be reduced. The third particle PTC3 may be in the shape of sphere or oval (e.g., may be generally spherical or generally ovoid).

The third particle PTC3 may have a porosity of about 20% to about 40%. Porosity (n) may be defined as the pore volume ($V_p$) divided by the total volume (Vt) of a particle ($n=V_p/N_t$). The porosity of the active material particles can be measured using BET (Brunauer-Emmett-Teller) analysis, which determines the specific surface area and pore structure based on gas adsorption. By measuring the amount of gas adsorbed on the material's surface at different pressures, the BET method calculates the specific surface area (SSA) and, when combined with BJH (Barrett-Joyner-Halenda) analysis, provides insights into pore size distribution and pore volume. This method is particularly useful for analyzing nanometer-scale pores (0.5-300 nm) and is widely applied in lithium-ion battery materials to evaluate electrolyte infiltration and ion diffusion pathways. A Span value of the third particle PTC3, analyzed through a particle size analyzer, may be about 0.3 to about 0.75.

Hereinafter, the positive electrode active material layer AML1 according to embodiments of the present disclosure will be described in more detail.

The second particle may be in an amount of about 5 wt% to about 20 wt%, about 10 wt% to about 20 wt%, about 15 wt% to about 30 wt%, about 20 wt% to about 30 wt%, or about 25 wt% to about 35 wt%, with respect to a total weight of the first particle PTC1, the second particle PTC2, and the third particle PTC3 in the positive electrode active material layer AML1.

The positive electrode or positive electrode active material layer AML1 includes manganese (Mn). A total doping content of manganese (Mn) may be defined as the sum of a doping content M1 of manganese (Mn) included in the first positive electrode active material layer ATL1 and a doping content M2 of manganese (Mn) included in the second positive electrode active material layer ATL2. The doping content M1 of manganese (Mn) included in the first positive electrode active material layer ATL1 may be defined as the sum of a product of the manganese (Mn) doping content ($z1$ in Formula 1 described above) in the first particle PTC1 and a weight ratio (or amount) of the first particle PTC1, and a product of the manganese (Mn) doping content ($z2$ in Formula 2 described above) in the second particle PTC2 and a weight ratio (or amount) of the second particle PTC2. The doping content M2 of manganese (Mn) included in the second positive electrode active material layer ATL2 may be defined as a product of the manganese (Mn) doping content ($z3$ in Formula 3 described above) in the third particle PTC3 and a weight ratio (or amount) of the third particle PTC3.

The total doping content of manganese (Mn) in the positive electrode active material layer AML1 may be about 0.40 to about 0.90, about 0.40 to about 0.60, about 0.50 to about 0.90, about 0.50 to about 0.70, about 0.60 to about 0.80, about 0.60 to about 0.70, about 0.50 to about 0.60, or about 0.50.

The positive electrode active material layer AML1 according to embodiments of the present disclosure has a double layer structure in which the second positive electrode active material layer ATL2 is stacked on the first positive electrode active material layer ATL1. The positive electrode active material layer AML1 includes or may include a functional additive ADD. The first positive electrode active material layer ATL1 includes or may include a first functional additive ADD1, and the second positive electrode active material layer ATL2 includes or may include a second functional additive ADD2. The functional additive ADD may indicate at least one of the first functional additive ADD1 or the second functional additive ADD2.

The functional additive may include a conductive material CDM (e.g., an electrically conductive material CDM) and a binder BND. When the functional additive is included, the positive electrode active material layer may have improved performance. For example, materials in a positive electrode active material layer may be well bonded, the bindability of an electrode plate may be improved, and the conductivity (e.g., electrical conductivity) of a positive electrode active material layer may be improved.

The first particle PTC1 may have a very small particle size and thus may have poor bindability with respect to the current collector COL1, preventing an electrode plate from being easily prepared (or reducing the ease with which an electrode plate can be prepared). If the active material layer is prepared using only the first particle PTC1, functional additives may be utilized or required in large quantities. For example, a relatively large amount of binder BND may be utilized or required to attach the first particle PTC1 having a small average particle diameter to a current collector, but a relatively small amount of binder BND may be utilized required to attach the second particle PTC2 having a large average particle diameter to a current collector. The amount of the binder BND utilized or required through the first positive electrode active material layer ATL1 including the first particle PTC1 and the second particle PTC2 may be reduced.

In the positive electrode active material layer AML1 of the present disclosure, a double layer structure, in which the first positive electrode active material layer ATL1, which may utilize or require functional additive in relatively small quantities to be attached to a current collector, is first bonded, and the second positive electrode active material layer ATL2 is bonded onto the first positive electrode active material layer ATL1, is applied.

With the double layer structure applied, an electrode plate may be more easily prepared. The first positive electrode active material layer ATL1 in which the first particle PTC1 and the second particle PTC2 are mixed together is first stacked on a current collector, and the second positive electrode active material layer ATL2 is stacked on the first positive electrode active material layer ATL1. When the first positive electrode active material layer ATL1 having excellent bindability of an electrode plate is first stacked on a current collector, functional additives may be less utilized or required, resulting in improved energy density. In embodiments, the first positive electrode active material layer ATL1 having greater bindability with respect to a current collector may be first prepared, and thus an electrode plate may have improved resistance (e.g., electrical resistance).

A weight ratio (or amount) of the first binder BND1 in the first positive electrode active material layer ATL1 may be about 1.5 wt% to about 3.0 wt% (e.g., based on 100 wt% of the first positive electrode active material layer ATL1).

A weight ratio (or amount) of the second binder BND2 in the second positive electrode active material layer ATL2 may be about 1.2 wt% to about 2 wt% (e.g., based on 100 wt% of the second positive electrode active material layer ATL2).

The weight ratio (or amount) of the first binder BND1 in the first positive electrode active material layer ATL1 may be lower than the weight ratio (or amount) of the second binder BND2 in the second positive electrode active material layer ATL2. In an embodiment, a ratio of the weight ratio (or amount) of the second binder BND2 to the weight ratio (or amount) of the first binder BND1 may be about 0.39 to about 1.35.

A weight ratio (or amount) of the first conductive material CDM1 in the first positive electrode active material layer ATL1 may be about 1.5 wt% to about 3.0 wt% (based on 100 wt% of the first positive electrode active material layer ATL1).

A weight ratio (or amount) of the second conductive material CDM2 in the second positive electrode active material layer ATL2 may be about 1.2 wt% to about 2.0 wt% (based on 100 wt% of the second positive electrode active material layer ATL2).

The weight ratio (or amount) of the first conductive material CDM1 in the first positive electrode active material layer ATL1 may be lower than the weight ratio (or amount) of the second conductive material CDM2 in the second positive electrode active material layer ATL2. In an embodiment, a ratio of the weight ratio (or amount) of the second conductive material CDM2 to the weight ratio (or amount) of the first conductive material CDM1 may be about 0.39 to about 1.35.

A weight ratio (or amount) of the first functional additive ADD1 in the first positive electrode active material layer ATL1 may be about 3.0 wt% to about 6.0 wt% (based on 100 wt% of the first positive electrode active material layer ATL1).

A weight ratio (or amount) of the second functional additive ADD2 in the second positive electrode active material layer ATL2 may be about 2.4 wt% to about 4.0 wt% (based on 100 wt% of the second positive electrode active material layer ATL2).

The weight ratio (or amount) of the first functional additive ADD1 in the first positive electrode active material layer ATL1 may be lower than the weight ratio (or amount) of the second functional additive ADD2 in the second positive electrode active material layer ATL2.

In an embodiment, a ratio of the weight ratio (or amount) of the second functional additive to the weight ratio (or amount) of the first functional additive may be about 0.8 to about 1.35, about 0.65 to about 1.35, or about 0.39 to about 1.35.

The first positive electrode active material layer ATL1 may have a thickness T1. In an embodiment, T1 may increase with a rise in weight of the first particle PTC1 and the second particle PTC2 included in the first positive electrode active material layer ATL1. The second positive electrode active material layer ATL2 may have a thickness T2. In an embodiment, T2 may increase with a rise in weight of the third particle PTC3 included in the second positive electrode active material layer ATL2. In an embodiment, a ratio of T2 to T1 (T2/T1) may be about 0.4 to about 2.0, about 0.9 to about 1.5, about 0.8 to about 1.2, or about 1. Within the range described above, stability and lifetime characteristics may be improved while excellent high voltage performance and energy density are maintained.

In an embodiment, the positive electrode active material layer AML1 of the present disclosure may have a pellet density (compressed density) of about 2.3 g/cc to about 2.8 g/cc. The pellet density may be determined by measuring the mass and volume of the electrode after calendaring (e.g., pressing) and is expressed in $g/cm^3$ (or g/cc). It is calculated as:

$$\text{Pellet Density} = \text{Mass of the electrode active material layer (g)} / \text{Volume of electrode active material layer (cm}^3)$$

The volume may be obtained by multiplying the electrode area (Width $\times$ Length) with its thickness measured using a micrometer. For high-precision analysis, methods such as X-ray CT, Mercury Porosimetry, and Helium Pycnometry can be used to assess internal porosity and density variations. Optimizing electrode density is crucial for achieving high energy density, proper electrolyte infiltration, and improved lithium-ion diffusion in lithium-ion battery electrodes.

In an embodiment, the first positive electrode active material layer ATL1 may have a loading level of about 5 $mg/cm^2$ to about 10 $mg/cm^2$. The second positive electrode active material layer ATL2 may have a loading level of about 5 $mg/cm^2$ to about 25 $mg/cm^2$. The loading level of an electrode may be determined by first obtaining a precisely cut sample from the coated electrode with a defined area (e.g., 1cm $\times$ 1cm). The total mass of this sample may then be measured using a precision balance. If the mass of the active material alone needs to be determined, the mass of an uncoated current collector with the same area may be separately measured and subtracted from the total mass. Next, the length and width of the sample may be measured to calculate the total area of the sample in $cm^2$. Finally, the loading level may be calculated using the formula:

$$\text{Loading Level} = \text{Total mass of electrode sample (mg)} / \text{Electrode sample area (cm}^2)$$

A rechargeable lithium battery including the positive electrode active material of the present disclosure may have improved low-temperature characteristics. In an embodiment, capacity at -20 °C relative to initial capacity (capacity at -20 °C/initial capacity) of the rechargeable lithium battery may be about 40% or greater. For example, capacity at -20 °C relative to initial capacity (capacity at -20 °C/initial capacity) of the rechargeable lithium battery of the present disclosure may be about 40% to about 100%, about 50% to about 100%, or about 96% to about 99%.

A rechargeable lithium battery including the positive electrode active material of the present disclosure may have improved operating voltage. In an embodiment, the rechargeable lithium battery of the present disclosure may have an operating voltage range of about 3 V to about 5 V. For example, the operating voltage range may be about 3 V to about 4.5 V, or about 3.5 V to about 4 V.

A rechargeable lithium battery including the positive electrode active material of the present disclosure may have improved lifetime characteristics. In an embodiment, the rechargeable lithium battery of the present disclosure may have a capacity retention of about 98% or greater after 50 times of charging/discharging at a constant current of 0.1 C at the voltage described above. For example, the capacity retention may be about 98% to about 100%, or about 99.8% to about 100%.

**Method for Preparing Positive Electrode Active Material**

Hereinafter, Preparation Examples, Examples, and Comparative Examples of the present disclosure will be described. However, the following Examples are presented only as embodiments of the present disclosure, and the present disclosure is not limited by the following Examples.

**Preparation Example 1: Preparation of First Particle PTC1**

A manganese iron phosphate precursor ($Mn_{0.6}Fe_{0.4}PO_4$), lithium carbonate, and titanium dioxide were mixed together at a molar ratio of 1:1.03:0.004. 10 wt% of glucose was added to the resultant mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The resultant fired product was ground to obtain a first particle in the form of a single particle. The first particle had an average size of about 100 nm to about 200 nm.

**Preparation Example 2-1: Preparation of Second Particle PTC2 in the form of Small Particle**

A small particle precursor was prepared using a co-precipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60:10:30 to prepare a metal raw material mixture. The metal raw material mixture, aqueous ammonia, and sodium hydroxide were added into a reactor and subjected to reactions. The resultant slurry solution in the reactor was filtered and washed with high purity distilled water. The washed material was dried in a hot air oven at 210 °C for 24 hours to obtain a small particle precursor ($Ni_{0.6}Co_{0.1}Mn_{0.3}$ $(OH)_2$) powder having an average particle diameter of about 4 $\mu$m.

The small particle precursor and anhydrous lithium hydroxide (LiOH) were dry mixed together using a Henschel mixer. Lithium and transition metal were mixed together at a molar ratio of about 1:1. The transition metal is the sum total of transition metals included in the mid nickel-based precursor (Ni+Co+Mn). A melting agent was further added to the resultant mixture, and the mixture was heat treated (e.g., firing process) at about 910 °C for 8 hours in an oxygen atmosphere to synthesize small lithium composite oxide particles. The particles were ground using a jet mill at a pressure of 3 bar. The particles were represented by the Formula $LiNi_{0.6}Co_{0.1}Mn_{0.3}O_2$. Aluminium oxide was added to the oxide (represented by the Formula $LiNi_{0.6}Co_{0.1}Mn_{0.3}O_2$) and then the resultant mixture was subjected to a second heat treatment at 800 °C for 8 hours in an oxygen atmosphere to prepare a positive electrode active material. The second particle was represented by Formula of $LiNi_{0.6}Co_{0.1}Mn_{0.3}O_2$.

**Preparation Example 2-2: Preparation of Second Particle PTC2 in the form of Large Particle**

A large particle precursor was prepared using a co-precipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60:10:30 to prepare a metal raw material mixture. A diluted solution of aqueous ammonia ($NH_4OH$) and sodium hydroxide (NaOH) as a precipitant were prepared to form a complex. Thereafter, the metal raw material mixture, aqueous ammonia, and sodium hydroxide were added into a reactor. Sodium hydroxide was added to maintain the pH of the resultant mixture in the reactor. The mixture was subjected to reactions for about 20 hours while being stirred in the reactor. The slurry solution in the reactor was filtered and washed with high purity distilled water. The resultant washed material was dried in a hot air oven at 750 °C for 24 hours to obtain a large particle precursor ($Ni_{0.6}Co_{0.1}Mn_{0.3}(OH)_2$) powder having a particle size of about 18 $\mu$m.

The large particle precursor and anhydrous lithium hydroxide (LiOH) were dry mixed together using a Henschel mixer. Lithium and transition metal were mixed together at a molar ratio of about 1:1. The transition metal is the sum total of transition metals included in the large particle precursor (Ni+Co+Mn). The resultant mixture was heat treated (e.g., firing process) at about 750 °C for 15 hours in an oxygen atmosphere to synthesize large lithium composite oxide particles. The particles were ground using a jet mill at a pressure of 3 bar. The particles were represented by the Formula $LiNi_{0.6}Co_{0.1}Mn_{0.3}O_2$. Aluminium oxide was added to the oxide (represented by the Formula $LiNi_{0.6}Co_{0.1}Mn_{0.3}O_2$) and then the resultant mixture was subjected to a second heat treatment at 800 °C for 8 hours in an oxygen atmosphere to prepare a positive electrode active material. The second particle was represented by the Formula $LiNi_{0.6}Co_{0.1}Mn_{0.3}O_2$.

**Preparation Example 2-3: Preparation of Bimodal Second Particle PTC2**

The small particle of Preparation Example 2-1 and the large particle of Preparation Example 2-2 were mixed together at a weight ratio of 30:70 to prepare a bimodal second particle.

**Preparation Example 3: Preparation of Third Particle PTC3**

A manganese iron phosphate precursor ($Mn_{0.6}Fe_{0.4}PO_4$), lithium carbonate, and titanium dioxide were mixed together at a molar ratio of 1:1.03:0.004. 10 wt% of glucose was further added to the resultant mixture. The resultant slurry mixture was spray-dried and evaporated to dryness at a spray pressure of 0.5 MPa and a temperature of 230 °C. The dried mixture was fired at 750 °C for 10 hours in a nitrogen atmosphere to obtain a third particle in the form of a secondary particle. Primary particles in the third particle had an average size of about 50 nm to about 150 nm.

**Preparation of Single Layer Electrode Plate**

**Comparative Example 1-1**

The first particle of Preparation Example 1 and the second particle of Preparation Example 2-1 were mixed together at a weight ratio of 30:70 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-2**

The first particle of Preparation Example 1 and the second particle of Preparation Example 2-1 were mixed together at a weight ratio of 40:60 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-3**

The first particle of Preparation Example 1 and the second particle of Preparation Example 2-1 were mixed together at a weight ratio of 50:50 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-4**

The first particle of Preparation Example 1 and the second particle of Preparation Example 2-1 were mixed together at a weight ratio of 60:40 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-5**

The first particle of Preparation Example 1 and the second particle of Preparation Example 2-1 were mixed together at a weight ratio of 70:30 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-6**

The first particle of Preparation Example 1 and the second particle of Preparation Example 2-1 were mixed together at a weight ratio of 80:20 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-7**

The first particle of Preparation Example 1 and the second particle of Preparation Example 2-1 were mixed together at a weight ratio of 90:10 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 1-8**

The first particle of Preparation Example 1, the second particle of Preparation Example 2-1, and the third particle of Preparation Example 3 were mixed together at a weight ratio of 35:30:35 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 2-1**

The first particle of Preparation Example 1 and the second particle of Preparation Example 2-2 were mixed together at a weight ratio of 70:30 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Comparative Example 2-2**

The first particle of Preparation Example 1 and the second particle of Preparation Example 2-3 were mixed together at a weight ratio of 70:30 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

**Preparation of Double Layer Electrode Plate**

**Example 1-1**

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 30:40:30. Through a roll press, a positive electrode in which the current collector, the first positive electrode active material layer, and the second positive electrode active material layer were stacked in this order was prepared.

**Example 1-2**

The first particle of Preparation Example 1 and the second particle of Preparation Example 2-2 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 30:40:30. Through a roll press, a positive electrode in which the current collector, the first positive electrode active material layer, and the second positive electrode active material layer were stacked in this order was prepared.

**Example 1-3**

The first particle of Preparation Example 1 and the second particle of Preparation Example 2-3 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 30:40:30. Through a roll press, a positive electrode in which the current collector, the first positive electrode active material layer, and the second positive electrode active material layer were stacked in this order was prepared.

**Example 2-1**

An active material layer was formed in the same manner as in Example 1-1, except that the first particle, the second particle, and the third particle in the double layer positive electrode were present at a weight ratio of 35:30:35.

**Example 2-2**

An active material layer was formed in the same manner as in Example 1-2, except that the first particle, the second particle, and the third particle in the double layer positive electrode were present at a weight ratio of 35:30:35.

**Example 2-3**

An active material layer was formed in the same manner as in Example 1-3, except that the first particle, the second particle, and the third particle in the double layer positive electrode were present at a weight ratio of 35:30:35.

**Example 3-1**

An active material layer was formed in the same manner as in Example 1-1, except that the first particle, the second particle, and the third particle in the double layer positive electrode were present at a weight ratio of 40:20:40.

**Example 3-2**

An active material layer was formed in the same manner as in Example 1-2, except that the first particle, the second particle, and the third particle in the double layer positive electrode were present at a molar ratio of 40:20:40.

**Example 3-3**

An active material layer was formed in the same manner as in Example 1-3, except that the first particle, the second particle, and the third particle in the double layer positive electrode were present at a weight ratio of 40:20:40.

**Comparative Example 3-1**

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 1-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

**Comparative Example 3-2**

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 2-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

**Comparative Example 3-3**

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 3-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

The composition and structure of the electrode plates of Comparative Examples 1-1 to 1-8, 2-1, 2-2, and 3-1 to 3-3, and Examples 1-1 to 1-3, 2-1 to 2-3, and 3-1 to 3-3 are shown in Table 1.

**Preparation of Negative Electrode**

Graphite, a binder, and a conductive material were mixed together in an N-methylpyrrolidone solvent to prepare a negative electrode active material slurry. The negative electrode active material slurry was applied onto a copper current collector, dried, and rolled to prepare a negative electrode.

**Preparation of Rechargeable Lithium Battery**

A coin half-cell was prepared using the prepared positive electrode and negative electrode. A polypropylene film (Celgard™ 3510) was used as a separator. As an electrolyte, an electrolyte solution obtained by mixing 1.3 M $LiPF_6$ together with a mixed solvent of ethylene carbonate (EC), diethyl carbonate (DEC), and fluoroethylene carbonate (FEC) (volume ratio: 2:6:2) was used.

Table 1

| Item | | | Particle content (mol%) | | |
|---|---|---|---|---|---|
| | Electrode plate structure | Mn doping content (mol%) when mixed | First particle | Second Particle (form) | Third particle |
| Comparative Example 1-1 | Single layer | 39 | 30 | 70 (small particle) | - |
| Comparative Example 1-2 | Single layer | 42 | 40 | 60 (small particle) | - |
| Comparative Example 1-3 | Single layer | 45 | 50 | 50 (small particle) | - |
| Comparative Example 1-4 | Single layer | 48 | 60 | 40 (small particle) | - |
| Comparative Example 1-5 | Single layer | 51 | 70 | 30 (small particle) | - |
| Comparative Example 1-6 | Single layer | 54 | 80 | 20 (small particle) | - |
| Comparative Example 1-7 | Single layer | 57 | 90 | 10 (small particle) | - |
| Comparative Example 1-8 | Single layer | 51 | 35 | 30 (small particle) | 35 |
| Comparative Example 2-1 | Single layer | 51 | 70 | 30 (large particle) | - |
| Comparative Example 2-2 | Single layer | 51 | 70 | 30 (bimodal) | - |
| Comparative Example 3-1 | Double layer | 48 | 30 | 40 (small particle) | 30 |
| Comparative Example 3-2 | Double layer | 51 | 35 | 30 (small particle) | 35 |
| Comparative Example 3-3 | Double layer | 54 | 40 | 20 (small particle) | 40 |
| Example 1-1 | Double layer | 48 | 30 | 40 (small particle) | 30 |
| Example 1-2 | Double layer | 48 | 30 | 40 (large particle) | 30 |

(continued)

| Item | | | | Particle content (mol%) | |
|---|---|---|---|---|---|
| | Electrode plate structure | Mn doping content (mol%) when mixed | First particle | Second Particle (form) | Third particle |
| Example 1-3 | Double layer | 48 | 30 | 40 (bimodal) | 30 |
| Example 2-1 | Double layer | 51 | 35 | 30 (small particle) | 35 |
| Example 2-2 | Double layer | 51 | 35 | 30 (large particle) | 35 |
| Example 2-3 | Double layer | 51 | 35 | 30 (bimodal) | 35 |
| Example 3-1 | Double layer | 54 | 40 | 20 (small particle) | 40 |
| Example 3-2 | Double layer | 54 | 40 | 20 (large particle) | 40 |
| Example 3-3 | Double layer | 54 | 40 | 20 (bimodal) | 40 |

## Evaluation Example 1: Analysis of Positive Electrode Active Material Surface

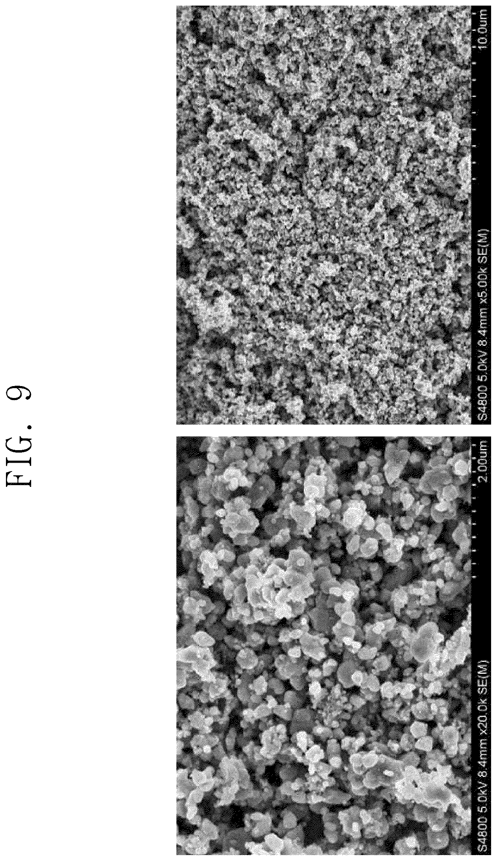

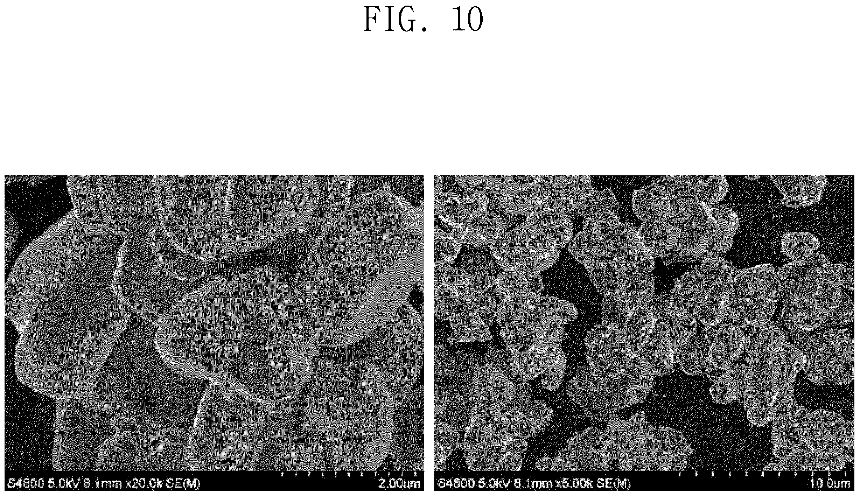

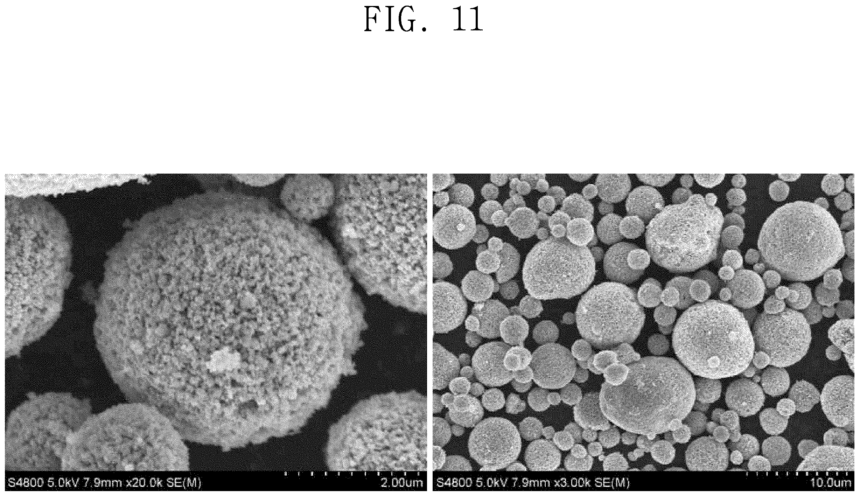

A pair of SEM images of the first particle prepared in Preparation Example 1 is shown in FIG. 9. A pair of SEM images of the second particle prepared in Preparation Example 2-3 is shown in FIG. 10. A pair of SEM images of the third particle prepared in Preparation Example 3 is shown in FIG. 11. Referring to FIG. 9, it can be seen that the first particle according to an embodiment of the present disclosure is in the form of a nano-sized fine single particle. Referring to FIG. 10, it can be seen that the second particle according to an embodiment of the present disclosure is in the form of a single particle or in the form in which a plurality of single particles are attached to one another. Compared to the first particle, the second particle takes a variety of suitable forms and has large particles. Referring to FIG. 11, it can be seen that the third particle has in the form of sphere in which a plurality of third primary particles are aggregated or agglomerated to form a secondary particle.

## Evaluation Example 2: Evaluation of Active Material

Pellet density (PD) of the positive electrode active material layers prepared through Examples 1-1 to 3-3 and Comparative Examples 1-1 to 3-3 was measured, and the results are shown in Table 2.

Table 2

| Item | Pellet density (g/cc) |
|---|---|
| Comparative Example 1-1 | 2.88 |
| Comparative Example 1-2 | 2.80 |
| Comparative Example 1-3 | 2.73 |
| Comparative Example 1-4 | 2.65 |
| Comparative Example 1-5 | 2.58 |
| Comparative Example 1-6 | 2.50 |
| Comparative Example 1-7 | 2.43 |
| Comparative Example 1-8 | 2.60 |
| Comparative Example 2-1 | 2.58 |
| Comparative Example 2-2 | 2.74 |
| Comparative Example 3-1 | 2.65 |
| Comparative Example 3-2 | 2.58 |
| Comparative Example 3-3 | 2.50 |
| Example 1-1 | 2.65 |

(continued)

| Item | Pellet density (g/cc) |
|---|---|
| Exampele 1-2 | 2.70 |
| Exampele 1-3 | 2.68 |
| Example 2-1 | 2.58 |
| Example 2-2 | 2.58 |
| Example 2-3 | 2.58 |
| Example 3-1 | 2.50 |
| Example 3-2 | 2.55 |
| Example 3-3 | 2.53 |

Referring to Table 2, it can be seen that the positive electrode active material layers according to Examples 1-1 to 1-3 are capable of keeping the pellet density at similar levels when compared to Comparative Examples 1-4 to 1-6, each having a single layer structure.

**Evaluation Example 3: Evaluation of Battery Properties**

Properties of rechargeable lithium batteries prepared using the positive electrodes of Examples 1-1 to 3-3 and Comparative Examples 1-1 to 3-3 were evaluated.

For initial charging/discharging, the rechargeable lithium batteries were initially charged at a constant current of 0.2 C and a constant voltage of 4.25 V, and after 10 minutes of rest, discharged up to 2.5 V at a constant current of 0.2 C. Thereafter, the charging/discharging was repeated 50 times at 45 °C and 1.0 C/1.0 C. In addition, a coin cell was additionally prepared and measured at -20 °C for a capacity of 0.2 C. The results of evaluating the battery properties are shown in Table 3 below.

Table 3

| Item | 0.2 C charge amoun t (mAh/g ) | 0.2 C dischar ge amoun t (mAh/g ) | 0.2 C efficiency (%) | -20 capacity (mAh/g) | Averag e voltage | 1 C lifetime (%, 50cy) |
|---|---|---|---|---|---|---|
| Comparat ive Example 1-1 | 201.4 | 180.9 | 89.8% | 74 | 3.64 | 98.6 |
| Comparat ive Example 1-2 | 194.8 | 175.8 | 90.2% | 77 | 3.63 | 98.7 |
| Comparat ive Example 1-3 | 188.2 | 170.7 | 90.7% | 81 | 3.63 | 98.8 |
| Comparat ive Example 1-4 | 181.5 | 165.5 | 91.2% | 84 | 3.62 | 98.8 |
| Comparat ive Example 1-5 | 174.9 | 160.4 | 91.7% | 87 | 3.62 | 98.9 |
| Comparat ive Example 1-6 | 168.3 | 155.3 | 92.3% | 90 | 3.61 | 99.0 |
| Comparat ive Example 1-7 | 161.6 | 150.1 | 92.9% | 93 | 3.61 | 99.0 |
| Comparat ive Example 1-8 | 175.3 | 161.5 | 92.1% | 97 | 3.62 | 99.1 |
| Comparat ive Example 2-1 | 174.2 | 159.8 | 91.73% | 87.2 | 3.62 | 99 |
| Comparat ive Example 2-2 | 174.6 | 160.1 | 91.72% | 87.1 | 3.62 | 99.3 |
| Comparat ive Example 3-1 | 182.2 | 166.9 | 91.60% | 85.3 | 3.62 | 97.9 |
| Comparat ive Example 3-2 | 175.6 | 161.2 | 91.80% | 82.7 | 3.62 | 99.0 |
| Comparat ive Example 3-3 | 174.2 | 160.0 | 91.85% | 85.2 | 3.62 | 97.4 |
| Example 1-1 | 183.7 | 168.4 | 91.67% | 83.5 | 3.62 | 99.0 |
| Example 1-2 | 182.9 | 167.9 | 91.80% | 84.9 | 3.62 | 99.3 |
| Example 1-3 | 184.0 | 168.8 | 91.74% | 84.6 | 3.62 | 99.4 |

(continued)

| Item | 0.2 C charge amount (mAh/g) | 0.2 C discharge amount (mAh/g) | 0.2 C efficiency (%) | -20 capacity (mAh/g) | Average voltage | 1 C lifetime (%, 50cy) |
|---|---|---|---|---|---|---|
| Example 2-1 | 176.7 | 162.3 | 91.9% | 81 | 3.62 | 99.8 |
| Example 2-2 | 175.9 | 161.8 | 91.98% | 81.8 | 3.62 | 99.3 |
| Example 2-3 | 177.0 | 162.7 | 91.92% | 80.7 | 3.62 | 99.7 |
| Example 3-1 | 175.5 | 161.3 | 91.91% | 83.7 | 3.62 | 98.8 |
| Example 3-2 | 174.7 | 160.9 | 92.10% | 84.5 | 3.62 | 98.6 |
| Example 3-3 | 175.8 | 161.8 | 92.04% | 83.4 | 3.62 | 99.0 |

Referring to Table 3, it can be seen that the rechargeable lithium batteries according to Examples 1-1 to 3-3 have improved 1 C lifetime compared to the rechargeable lithium batteries according to Comparative Examples 1-1 to 1-7. Considering charging/discharging efficiency and average voltage of the rechargeable lithium batteries according to Examples 1-1 to 3-3, the rechargeable lithium batteries are usable as batteries having excellent characteristics overall.

**Evaluation Example 4: Content of Functional Additive in Active Material Layer**

Weight ratios (or amounts) of functional additives utilized or required for preparing the positive electrodes in the single layer structures of Comparative Examples 1-1 to 2-2 were measured.

The weight ratios (or amounts) of the functional additives in the first positive electrode active material layers and the weight ratios (or amounts) of the functional additives in the second positive electrode active material layers utilized or required for preparing the positive electrodes in the double layer structures of Comparative Examples 3-1 to 3-3 were measured.

The weight ratios (or amounts) of the functional additives in the first positive electrode active material layers and the weight ratios (or amounts) of the functional additives in the second positive electrode active material layers in the positive electrodes of Examples 1-1 to 3-3 were measured. The weight ratios (or amounts) of the functional additives in the active material layers are shown in Table 4.

Table 4

| | Electrode plate structure | Weight ratio (or amount) of functional additive (with respect to 100 parts by weight of active material layer) | |
|---|---|---|---|
| | | Weight ratio (or amount) of first functional additive | Weight ratio (or amount) of second functional additive |
| Comparative Example 1-1 | Single layer | 4.0 wt% | |
| Comparative Example 1-2 | Single layer | 4.0 wt% | |
| Comparative Example 1-3 | Single layer | 4.0 wt% | |
| Comparative Example 1-4 | Single layer | 4.0 wt% | |
| Comparative Example 1-5 | Single layer | 4.0 wt% | |
| Comparative Example 1-6 | Single layer | 4.0 wt% | |
| Comparative Example 1-7 | Single layer | 4.0 wt% | |
| Comparative Example 1-8 | Single layer | 4.0 wt% | |
| Comparative Example 2-1 | Single layer | 4.0 wt% | |
| Comparative Example 2-2 | Single layer | 4.0 wt% | |
| Comparative Example 3-1 | Double layer | 2.4 wt% | 4.0 wt% |
| Comparative Example 3-2 | Double layer | 2.4 wt% | 4.0 wt% |
| Comparative Example 3-3 | Double layer | 2.4 wt% | 4.0 wt% |

(continued)

| | Electrode plate structure | Weight ratio (or amount) of functional additive (with respect to 100 parts by weight of active material layer) | |
|---|---|---|---|
| | | Weight ratio (or amount) of first functional additive | Weight ratio (or amount) of second functional additive |
| Example 1-1 | Double layer | 4.0 wt% | 2.4 wt% |
| Example 1-2 | Double layer | 4.0 wt% | 2.4 wt% |
| Example 1-3 | Double layer | 4.0 wt% | 2.4 wt% |
| Example 2-1 | Double layer | 4.0 wt% | 2.4 wt% |
| Example 2-2 | Double layer | 4.0 wt% | 2.4 wt% |
| Example 2-3 | Double layer | 4.0 wt% | 2.4 wt% |
| Example 3-1 | Double layer | 4.0 wt% | 2.4 wt% |
| Example 3-2 | Double layer | 4.0 wt% | 2.4 wt% |
| Example 3-3 | Double layer | 4.0 wt% | 2.4 wt% |

For example, when comparing Comparative Example 1-8 having a single layer structure with the same positive electrode active material ratio as Example 2-1 according to the present disclosure, it is seen that a total amount of functional additives utilized or required to form a positive electrode active material layer is smaller in Example 2-1 having a double layer structure. When compared to a single layer structure having the same content, the content of functional additives is reduced, and thus the active material layer may have improved energy density.

**Evaluation Example 5: Evaluation of Resistance and Bindability**

Characteristics of rechargeable lithium batteries prepared using positive electrodes each from Examples and Comparative Examples were evaluated.

For initial charging/discharging, the rechargeable lithium batteries were initially charged at a constant current of 0.2 C and after 10 minutes of rest, discharged up to 3.0 V at a constant current of 0.2 C, and then average voltage was evaluated. The rechargeable lithium batteries were subjected to 1 hour of rest at SOC50, and discharged at 1.0 C for 10 seconds, and then subjected to another 10 seconds of rest. In this case, cell resistance (DC-IR) was calculated by dividing the difference between the voltage after the end of the discharge and the voltage after the 10 seconds of rest by the current. The results are shown in Table 5 below.

Table 5

| Item | DCIR, SOC50 (Ω, 0.2 C/1.0 C) | Energy density (ED) |
|---|---|---|
| Comparative Example 1-1 | 16.8 | 658 |
| Comparative Example 1-2 | 20.5 | 638 |
| Comparative Example 1-3 | 24.3 | 619 |
| Comparative Example 1-4 | 28.0 | 599 |
| Comparative Example 1-5 | 31.8 | 578 |
| Comparative Example 1-6 | 35.5 | 556 |
| Comparative Example 1-7 | 39.3 | 533 |
| Comparative Example 1-8 | 29.7 | 580 |
| Comparative Example 2-1 | 33.1 | 576 |
| Comparative Example 2-2 | 32.5 | 578 |
| Comparative Example 3-1 | 22.3 | 604 |
| Comparative Example 3-2 | 23.8 | 582 |
| Comparative Example 3-3 | 26.2 | 577 |

(continued)

| Item | DCIR, SOC50 ($\Omega$, 0.2 C/1.0 C) | Energy density (ED) |
|---|---|---|
| Example 1-1 | 21.9 | 608 |
| Example 1-2 | 24.2 | 606 |
| Example 1-3 | 23.7 | 609 |
| Example 2-1 | 22.3 | 584 |
| Example 2-2 | 26.7 | 577 |
| Example 2-3 | 25.7 | 580 |
| Example 3-1 | 25.3 | 556 |
| Example 3-2 | 29.6 | 554 |
| Example 3-3 | 28.3 | 557 |

When comparing Examples 1-1, 2-1, and 3-1 with Comparative Examples 1-4, 1-5, and 1-6, respectively, it can be seen that Examples 1-1, 2-1, and 3-1 have significantly reduced resistance values. It can be seen that when applying a double layer structure, electrode plates have improved bindability and reduced resistance compared to electrode plates having a single layer structure.

Accordingly, a double layer structure of the Examples according to embodiments of the present disclosure is provided, and thus an electrode plate may have reduced resistance (e.g., electrical resistance) and improved energy density.

A positive electrode according to the present disclosure includes a first positive electrode active material layer including an olivine-based first particle that may have a size of hundreds of nanometers to several micrometers and a layered second particle that may have a size of several micrometers, and a second positive electrode active material layer including an olivine-based third particle that may have a size of several micrometers and stacked on the first positive electrode active material layer, and may thus have improved pellet density, capacity, and energy density. In the positive electrode according to the present disclosure, an electrode plate may be readily prepared and have improved resistance (e.g., electrical resistance). A rechargeable lithium battery according to the present disclosure may have relatively improved lifetime.

The descriptions described above are example embodiments for implementing the subject matter of the present disclosure. The present disclosure will include both the embodiments described above and embodiments that may be easily modified or simply changed in design. In addition, the present disclosure will also include technologies that may be easily modified and implemented using embodiments of the present disclosure. Therefore, the scope of the present disclosure should not be limited to the embodiments described above, but should be defined by the following claims as well as the equivalents thereof.

Certain embodiments are set out in the following clauses:

Clause 1. A positive electrode for a rechargeable lithium battery, comprising: a current collector; a first positive electrode active material layer on the current collector; and a second positive electrode active material layer on the first positive electrode active material layer,

wherein the first positive electrode active material layer comprises a first particle represented by Formula 1 below and having an olivine structure, a second particle represented by Formula 2 below and having a layered structure, and a first functional additive,

wherein the second positive electrode active material layer comprises a third particle represented by Formula 3 below and having an olivine structure, and a second functional additive,

wherein the first particle has a smaller average particle diameter than the third particle, the first functional additive and the second functional additive each comprise a conductive material and a binder, and the first functional additive in the first positive electrode active material layer has a lower weight ratio than the second functional additive in the second positive electrode active material layer,

[Formula 1] $\quad Li_{a1}Mn_{z1}Fe_{x1}B1_{y1}PO_{4-c1}$

wherein in Formula 1 above, B1 is at least one element selected from the group consisting of Al, Ti, V, and Mg, and $0.8 < a1 \leq 1.2$, $0.4 \leq z1 \leq 0.8$, $0.2 \leq x1 \leq 0.6$, $0.001 \leq y1 \leq 0.05$, $0 \leq c1 \leq 0.05$, and $x1 + y1 + z1 = 1$ are satisfied,

[Formula 2]     $Li_{a2}Ni_{x2}Co_{y2}Mn_{z2}B2_{b2}O_{2-c2}$

wherein in Formula 2 above, B2 is at least one element selected from the group consisting of Al, Ti, Mg, Zr, Mo, and Nb, and $0.8 \leq a2 \leq 1.2$, $0.5 \leq x2 \leq 0.8$, $0.0 \leq y2 \leq 0.10$, $0.1 \leq z2 \leq 0.35$, $0.01 \leq b2 \leq 0.1$, $0 \leq c2 \leq 0.05$, and $x2 + y2 + z2 + b2 = 1$ are satisfied, and

[Formula 3]     $Li_{a3}Mn_{z3}Fe_{x3}B3_{y3}PO_{4-c3}$

wherein in Formula 3 above, B3 is at least one element selected from the group consisting of Al, Ti, V, and Mg, and $0.8 < a3 \leq 1.2$, $0.4 \leq z3 \leq 0.8$, $0 \leq x3 \leq 0.6$, $0.001 \leq y3 \leq 0.05$, $0 \leq c3 \leq 0.05$, and $x3 + y3 + z3 = 1$ are satisfied.

Clause 2. The positive electrode for a rechargeable lithium battery of Clause 1, wherein the binder comprises at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon.

Clause 3. The positive electrode for a rechargeable lithium battery of Clause 1 or Clause 2, wherein a total doping content of manganese (Mn) in the positive electrode is about 0.50 to about 0.60.

Clause 4. The positive electrode for a rechargeable lithium battery of any preceding Clause, wherein a thickness ratio of the second positive electrode active material layer to the first positive electrode active material layer is about 0.8 to about 1.2.

Clause 5. The positive electrode for a rechargeable lithium battery of any preceding Clause, wherein the second particle has a BET specific surface area of about 0.3 m²/g to about 1.2 m²/g.

Clause 6. A rechargeable lithium battery comprising the positive electrode according as hereinbefore described, including in any one of Clauses 1 to 5, and/or as claimed in any of the accompanying claims.

## Claims

1. A positive electrode for a rechargeable lithium battery, comprising:

   a current collector;
   a first positive electrode active material layer on the current collector; and
   a second positive electrode active material layer on the first positive electrode active material layer,
   wherein the first positive electrode active material layer comprises a first particle represented by Formula 1 below and having an olivine structure, and a second particle represented by Formula 2 below and having a layered structure,
   the second positive electrode active material layer comprises a third particle represented by Formula 3 below and having an olivine structure,
   the first particle is in the form of a single particle, the third particle is in the form of a secondary particle in which a plurality of third primary particles are aggregated, and the second particle has a greater average particle diameter than each of the first particle and the third particle,

   Formula 1     $Li_{a1}Mn_{z1}Fe_{x1}B1_{y1}PO_{4-c1}$

   wherein in Formula 1 above, B1 is at least one element selected from the group consisting of Al, Ti, V, and Mg, and $0.8 < a1 \leq 1.2$, $0.4 \leq z1 \leq 0.8$, $0.2 \leq x1 \leq 0.6$, $0 \leq y1 \leq 0.05$, $0 \leq c1 \leq 0.05$, and $x1 + y1 + z1 = 1$ are satisfied,

   Formula 2     $Li_{a2}Ni_{x2}Co_{y2}Mn_{z2}B2_{b2}O_{2-c2}$

   wherein in Formula 2 above, B2 is at least one element selected from the group consisting of Al, Ti, Mg, Zr, Mo, and Nb, and $0.8 \leq a2 \leq 1.2$, $0.5 \leq x2 \leq 0.8$, $0.0 \leq y2 \leq 0.10$, $0.1 \leq z2 \leq 0.35$, $0 \leq b2 \leq 0.1$ $0 \leq c2 \leq 0.05$, and $x2 + y2 + z2 + b2 = 1$ are satisfied, and

   Formula 3     $Li_{a3}Mn_{z3}Fe_{x3}B3_{y3}PO_{4-c3}$

wherein in Formula 3 above, B3 is at least one element selected from the group consisting of Al, Ti, V, and Mg, and $0.8 < a3 \leq 1.2$, $0.4 \leq z3 \leq 0.8$, $0 \leq x3 \leq 0.6$, $0 \leq y3 \leq 0.05$, $0 \leq c3 \leq 0.05$, and $x3 + y3 + z3 = 1$ are satisfied.

2. The positive electrode for a rechargeable lithium battery as claimed in claim 1, wherein the third primary particle has a size of about 50 nm to about 150 nm, and
the third particle has an average particle diameter (D50) of about 3 $\mu$m to about 7 $\mu$m.

3. The positive electrode for a rechargeable lithium battery as claimed in claim 1 or claims 2, wherein with respect to a total weight of the first particle, the second particle, and the third particle in the positive electrode, a weight ratio of the second particle is about 20 wt% to about 30 wt%.

4. The positive electrode for a rechargeable lithium battery as claimed in any preceding claim, wherein a total doping content of manganese (Mn) in the positive electrode is about 0.50 to about 0.60.

5. The positive electrode for a rechargeable lithium battery as claimed in any preceding claim, wherein a thickness ratio of the second positive electrode active material layer to the first positive electrode active material layer is about 0.8 to about 1.2.

6. The positive electrode for a rechargeable lithium battery as claimed in any preceding claim, wherein the second particle has a bimodal particle size distribution comprising a large particle and a small particle.

7. The positive electrode for a rechargeable lithium battery as claimed in claim 6, wherein the small particle has an average particle diameter ($D_{50}$) of about 2 $\mu$m to about 5 $\mu$m.

8. The positive electrode for a rechargeable lithium battery as claimed in claim 6 or claim 7, wherein the large particle has an average particle diameter ($D_{50}$) of about 10 $\mu$m to about 20 $\mu$m.

9. The positive electrode for a rechargeable lithium battery as claimed in any one of claims 6 to 8, wherein with respect to a total content of the second particle, the small particle is present in a lower content than the large particle.

10. The positive electrode for a rechargeable lithium battery as claimed in any preceding claim, wherein with respect to a total content of the second particle, the small particle of the second particle is in an amount of about 20 wt% to about 30 wt%.

11. A positive electrode for a rechargeable lithium battery, comprising:

a current collector;
a first positive electrode active material layer on the current collector; and
a second positive electrode active material layer on the first positive electrode active material layer,
wherein the first positive electrode active material layer comprises a first particle represented by Formula 1 below and having an olivine structure, a second particle represented by Formula 2 below and having a layered structure, and a first functional additive,
the second positive electrode active material layer comprises a third particle represented by Formula 3 below and having an olivine structure, and a second functional additive,
the first particle has a smaller average particle diameter than the third particle,
the first functional additive and the second functional additive each comprise a conductive material and a binder, and
the first functional additive in the first positive electrode active material layer has a lower weight ratio than the second functional additive in the second positive electrode active material layer,

Formula 1 $\qquad Li_{a1}Mn_{z1}Fe_{x1}B1_{y1}PO_{4-c1}$

wherein in Formula 1 above, B1 is at least one element selected from the group consisting of Al, Ti, V, and Mg, and $0.8 < a1 \leq 1.2$, $0.4 \leq z1 \leq 0.8$, $0.2 \leq x1 \leq 0.6$, $0 \leq y1 \leq 0.05$, $0 \leq c1 \leq 0.05$, and $x1 + y1 + z1 = 1$ are satisfied,

Formula 2 $\qquad Li_{a2}Ni_{x2}Co_{y2}Mn_{z2}B2_{b2}O_{2-c2}$

wherein in Formula 2 above, B2 is at least one element selected from the group consisting of Al, Ti, Mg, Zr, Mo, and Nb, and $0.8 \leq a2 \leq 1.2$, $0.5 \leq x2 \leq 0.8$, $0.0 \leq y2 \leq 0.10$, $0.1 \leq z2 \leq 0.35$, $0 \leq b2 \leq 0.1$ $0 \leq c2 \leq 0.05$, and $x2 + y2 + z2 + b2 = 1$ are satisfied, and

Formula 3 $\qquad$ $Li_{a3}Mn_{z3}Fe_{x3}B3_{y3}PO_{4-c3}$

wherein in Formula 3 above, B3 is at least one element selected from the group consisting of Al, Ti, V, and Mg, and $0.8 < a3 \leq 1.2$, $0.4 \leq z3 \leq 0.8$, $0 \leq x3 \leq 0.6$, $0 \leq y3 \leq 0.05$, $0 \leq c3 \leq 0.05$, and $x3 + y3 + z3 = 1$ are satisfied.

12. The positive electrode for a rechargeable lithium battery as claimed in claim 11, wherein the weight ratio of the second functional additive to the weight ratio of the first functional additive is about 0.8 to about 1.35.

13. The positive electrode for a rechargeable lithium battery as claimed in claim 11 or claim 12, wherein the weight ratio of the first functional additive is about 3.0 wt% to about 6.0 wt% based on 100 wt% of the first positive electrode active material layer.

14. The positive electrode for a rechargeable lithium battery as claimed in any one of claim 11 to 13, wherein the weight ratio of the second functional additive is about 2.4 wt% to about 4.0 wt% based on 100 wt% of the second positive electrode active material layer.

15. The positive electrode for a rechargeable lithium battery as claimed in any one of claims 11 to 14, wherein with respect to a total weight of the first particle, the second particle, and the third particle in the positive electrode, a weight ratio of the second particle is about 20 wt% to about 30 wt%.

# FIG. 1

ELL

Li$^+$

COL1 AML1     30     COL2 AML2

10          20

# FIG. 2

FIG. 3

# FIG. 4

# FIG. 5

# FIG. 6

<u>10</u>

ATL2 ⎱
ATL1 ⎰ AML1

COL1

# FIG. 7

ATL1

PTC2(PC2)

PTC1  NNP_2  NNP_2

BND(BND1)
CDM(CDM1)  } ADD1

NNP_2
NNP_2  } PTC2(SP2)

# FIG. 8

FIG. 9

FIG. 10

FIG. 11

Europäisches
Patentamt

European
Patent Office

Office européen
des brevets

# EUROPEAN SEARCH REPORT

**Application Number**

EP 25 16 9052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/349334 A1 (DUMONT ERWAN [FR] ET AL) 3 December 2015 (2015-12-03) | 1-3,6-8, 11-15 | INV. H01M4/131 |
| A | * paragraphs [0010] - [0030], [0094], [0113] * | 4,5,9,10 | H01M4/136 H01M4/36 H01M4/485 |
| Y | US 2023/261175 A1 (XU XIAOFU [CN] ET AL) 17 August 2023 (2023-08-17) | 1-3,6-8, 11-15 | H01M4/505 H01M4/525 |
| A | * example 31; tables 3, 5 * | 4,5,9,10 | H01M4/58 |
| A | EP 3 528 321 B1 (SAMSUNG SDI CO LTD [KR]) 13 October 2021 (2021-10-13) * paragraphs [0021] - [0030] * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 23 September 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9052

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2025

| Patent document cited in search report | | Publication date | Patent family member(s) | | Publication date |
|---|---|---|---|---|---|
| US 2015349334 | A1 | 03-12-2015 | EP | 2939296 A1 | 04-11-2015 |
| | | | FR | 3000302 A1 | 27-06-2014 |
| | | | KR | 20150110510 A | 02-10-2015 |
| | | | US | 2015349334 A1 | 03-12-2015 |
| | | | WO | 2014102071 A1 | 03-07-2014 |
| US 2023261175 | A1 | 17-08-2023 | CN | 116601794 A | 15-08-2023 |
| | | | CN | 119153653 A | 17-12-2024 |
| | | | CN | 119297222 A | 10-01-2025 |
| | | | EP | 4224579 A1 | 09-08-2023 |
| | | | US | 2023261175 A1 | 17-08-2023 |
| | | | WO | 2023108352 A1 | 22-06-2023 |
| EP 3528321 | B1 | 13-10-2021 | CN | 110176579 A | 27-08-2019 |
| | | | CN | 116230906 A | 06-06-2023 |
| | | | CN | 116230907 A | 06-06-2023 |
| | | | EP | 3528321 A1 | 21-08-2019 |
| | | | KR | 20190099655 A | 28-08-2019 |
| | | | US | 2019260017 A1 | 22-08-2019 |

EPO FORM P0459

For more details about this annex : see Official Journal of the European Patent Office, No. 12/82